# EUROPEAN PATENT SPECIFICATION

(11) **EP 3 341 603 B1**
(45) Date of publication and mention of the grant of the patent: **08.07.2020**
(21) Application number: 15756944.3
(22) Date of filing: 24.08.2015
(51) Int. Cl.: F02D 35/02, F02D 19/02

(54) **METHOD AND APPARATUS FOR CONTROLLING AN INTERNAL COMBUSTION ENGINE**
VERFAHREN UND VORRICHTUNG ZUM STEUERN EINER BRENNKRAFTMASCHINE
PROCÉDÉ ET APPAREIL DE CONTRÔLER D'UN MOTEUR À COMBUSTION INTERNE

(43) Date of publication of application: 04.07.2018
(73) Proprietor: Wärtsilä Finland Oy, 65100 Vaasa (FI)
(72) Inventor: CARLSON, John, FI-65100 Vaasa (FI)
(74) Representative: Berggren Oy, Helsinki & Oulu
(86) International application number: PCT/FI2015/050541
(87) International publication number: WO 2017/032915

(56) References cited:
- DE-A1- 19 631 923
- US-A- 5 692 474
- US-A- 5 765 530
- US-A1- 2004 267 430
- US-A1- 2014 172 277

## Description

### Field of technology

The present invention relates to a control arrangement for controlling combustion in a cylinder of a reciprocating internal combustion piston engine. The reciprocating internal combustion piston engine is capable to use gaseous fuel, such as natural gas, biogas or a processed natural gas as a main fuel to be combusted in the cylinders of the engine.

### Prior art

It is known to use natural gas, biogas or a processed natural gas as fuel in the internal combustion engines. These engines are called as internal combustion gas engines or gas engines. The composition of the natural gas varies depending on a source of the natural gas or how it has been processed. The natural gases are specific for their origin, which means that gas fields all over the world produce field specific natural gases having different compositions. The main component of the natural gas is methane. Other components are ethane, nitrogen and propane for example.

Biogas typically refers to a mixture of different gases produced by the breakdown of organic matter in the absence of oxygen. Biogas can be produced from raw materials such as agricultural waste, manure, municipal waste, plant material, sewage, green waste or food waste. Biogas is primarily methane (CH 4) and carbon dioxide (CO₂).

Natural gas or biogas can be processed in order to be more suitable for transportation like liquefied natural gas (LNG) or for combustion like compressed natural gas (CNG).

Hydrogen blending is proposed as a means to increase the output of renewable energy facilities, such as wind farms, by providing a hydrogen storage and delivery pathway across a broad range of geographic locations. Hydrogen blending changes composition of the gas used in the engine, which means that the combustion processes in the cylinders of the engine changes. This affects, for example, to combustion stability and exhaust gas emissions. In order to take into accounts variations of the gas to be combusted, the gas should be analyzed. The gas can be analyzed by a gas chromatograph. The gas chromatograph analyzes the gas supplied into the gas engine. In practice a side flow of the gas from and to a main gas pipe into the engine in needed to deliver a small amount of the gas through the gas chromatograph. The gas chromatograph is an expensive device, and it needs calibration and maintenance frequently. In addition it is quite slow because it takes time that the gas in the side flow can be used in order to get a proper gas analyze. US2004/267430 A1 as one example for relevant prior art discloses the estimation of a start of combustion based on an accelerator sensor signal.

### Short description of invention

The aim of the invention is to achieve a system wherein the variations of the gaseous fuel to be combusted in a reciprocating internal combustion piston engine can be taken into account in a simpler and faster way than in known solutions. The aim is achieved as described in independent claims.

In the method according to the invention for controlling combustion in at least one cylinder of an internal combustion engine pressure in at least one cylinder is monitored. An average heat release timing deduced from the monitoring of the pressure is formed. The average heat release timing is compared with nominal heat release timing. It is determined whether the average heat release timing is before or after the nominal heat release timing. Main gas valve duration is monitored, and it is determined whether the main gas valve duration has changed within a follow-up period.

The ignition timing is adjusted if the main gas valve duration has remained unchanged or within predetermined limits during a predetermined follow-up period, and the average heat release timing is before or after the nominal heat release timing. The ignition timing is retarded in case of the average heat release timing is before the nominal heat release timing, or advanced in case of the average heat release timing is after the nominal heat release timing.

An apparatus according to the invention controls combustion in at least one cylinder of an internal combustion engine having a controller to control ignition timing and monitoring means to monitor a flywheel and ignition maps. The controller is arranged to utilize the monitoring means and the ignition maps. The controller is also arranged to monitor main gas valve duration, and the apparatus further comprises pressure monitoring means to monitor pressure in at least one cylinder.

The apparatus has a second controller that is arranged to form an average heat release timing deduced from the monitoring of the pressure by the pressure monitoring means. The second controller also compares the average heat release timing with nominal heat release timing, determines whether the average heat release timing is before or after the nominal heat release timing, and determines whether the main gas valve duration has changed within a follow-up period.

In addition the second controller adjusts the ignition timing in cooperation with the controller if the main gas valve duration has remained unchanged or within predetermined limits during a predetermined follow-up period, and the average heat release timing is before or after the nominal heat release timing. This is made in such a way that the ignition timing is retarded in case of the average heat release timing is before the nominal heat release timing, or advanced in case of the average heat release timing is after the nominal heat release timing.

### List of figures

In the following, the invention is described in more detail by reference to the enclosed drawings, where
- Figure 1: illustrates an example of an embodiment of the invention,
- Figure 2: illustrates an example of an embodiment of the invention in more detail, and
- Figure 3: illustrates a flow chart example of the method according to the invention.

### Description of the invention

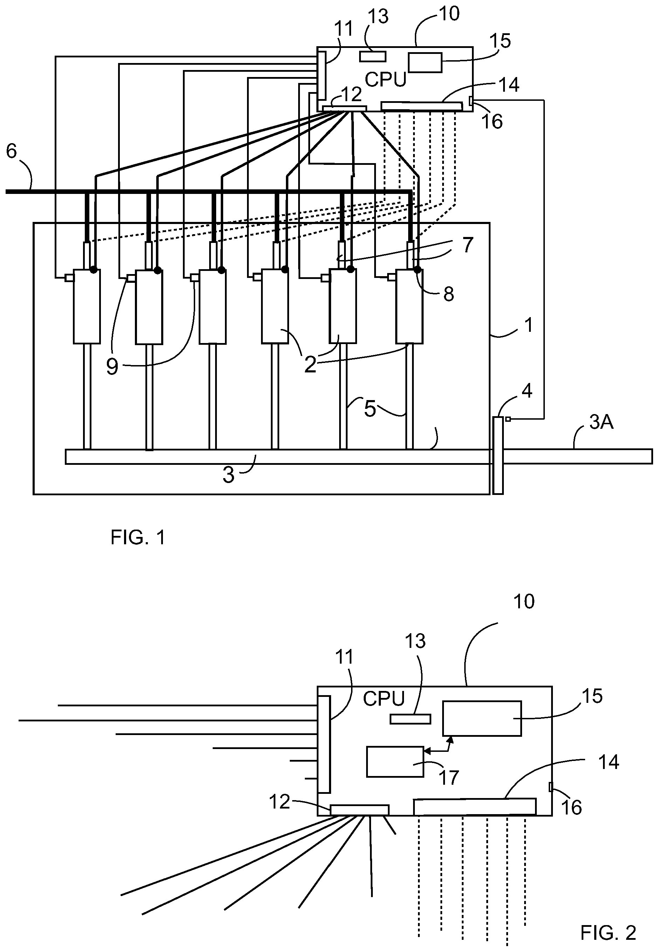

Figure 1 illustrates an example of a embodiment showing a reciprocating internal combustion piston engine 1. The engine 1 comprises cylinders 2 wherein the gaseous fuel to be combusted is burned in order to produce power to rotate crankshaft 3 of the engine. Connecting rods 5 connect the crankshaft with pistons inside the cylinders 2. The crankshaft is also connected to a flywheel 4 that rotates with the crankshaft. The crankshaft continues as a power distribution shaft 3A outside the engines main body 1.

The engine 1 comprises or is connected to a control processor unit 10 that controls different tasks of the engine 1. The control processor unit 10 controls, for example, speed and load of the engine. The control tasks relate to at least one cylinder of an internal combustion gas engine. Usually the control concerns all cylinders of the engine. The control processor unit of the embodiment of figure 1 has a controller 15 to control ignition timing and monitoring means 16 to monitor a flywheel, and also ignition maps 13. The ignition maps contain ignition timings for different situations. The monitoring means 16 are connected to sensor 4A that measures speed and/or position of the flywheel 4. The sensor sends data to the monitoring means 16.

The engine 1 has also a gas delivery pipeline 6 in order to supply gas to intake valves 7 of the cylinders 2. The gas to be combusted in the cylinder is ignited by an ignition device 8 like a spark plug. The ignition may also be made by using a small amount of another fuel (not show in the figures), such as pilot fuel like gasoline or diesel in order to ensure the ignition inside the cylinder. Pressures inside the cylinders 2 are measured by pressure sensors 9.

The pressure sensors 9 are connected to pressure monitoring means 12 to monitor cylinder pressure. Cylinder pressure is monitored in at least one cylinder, but usually in all cylinders of the engine. The intake valves 7 and the ignition devices 8 are also connected to the control processor unit 10 having also pressure monitoring means 11 and a control interface 14 for the intake valves 7. Said monitoring means provide also interfaces for the connections between the control processor unit 10 and said sensors 4A, 9.

The controller 15 is arranged to utilize the monitoring means 16, and the ignition maps 13, and to monitor main gas valve duration. The main gas valve duration means period when the intake valve 7 is open for letting the gas to flow to the cylinder 2. The controller 15 on the control processor unit 10 controls the main gas valve durations of the cylinders, and the controller 15 also monitors the durations in order to utilize this data in the invention.

The apparatus of the invention like the control processing unit 10 further comprises a second controller 17 (figure 2) that is arranged to form an average heat release timing deduced from the monitoring of the pressure by the pressure monitoring means 12, compare the average heat release timing with a nominal heat release timing, and to determine whether the average heat release timing is before or after the nominal heat release timing. The second controller 17 is also arranged to determine whether the main gas valve duration has changed within a follow-up period, and to adjust the ignition timing in cooperation with the controller 15 if the main gas valve duration has remained unchanged within a follow-up period, and the average heat release timing is before or after the nominal heat release timing. The adjustment is made in such a way that the ignition timing is retarded in case of the average heat release timing is before the nominal heat release timing, or advanced in case of the average heat release timing is after the nominal heat release timing.

Heat release timing relates to certain point of time when a certain amount of heat of the combusting fuel is released. For example 50% heat release means a point of time or rotational/angular position of an engine when 50% of the heat of the combusting fuel is released. In the invention the average heat release timing and the nominal heat release timing can be a moment or position when predetermined, for example, value between 50% - 90 %, heat is released. By using the average heat release timing short disturbances can be ignored. The average heat release timing can be achieved by taking an average value within a certain number of consecutive heat release values relating to the same moment. The average heat release timing and the nominal heat release timing relate to the moment being between 50% - 90 %, more preferably 50% - 80 % and most preferably 50% - 70 % heat released. Values over and close to 50% are considered to give values which have reliable correlation to composition of gaseous fuel used. The nominal heat release timing is a moment when said timing has designed to exist. The designed timing relates to an efficient combustion in the cylinder when the combustion happens at a right phase with respect to the movement of the piston of the cylinder.

The background of the invention is that if the composition of the gas changes, it affects to the combustion. Blending H2 into natural gas speeds up combustion and changes its phasing. Blending CO2 has an opposite effect to retard combustion. This effect can be seen clearly in the 50% heat released, i.e. 50% HR (also a moment when 50% of the fuel has been combusted), having the crank angle where 50% of the fuel has been combusted. Each 10 vol-% addition of CO2 to standard natural gas (97% CH4) will retard the 50% HR timing by about 1 crank angle degree, for example. Similarly, each 10 vol-% addition of H2 will advance the 50% HR timing by about 2 crank angle degrees. Both of these effects seem consistent up to 30-40% of CO2 or H2.

So utilizing this information it can be deduced in case of the retarded HR timing, the gas comprises more CO2 than previously, or in case of the advanced HR timing the gas comprises more H2 than previously. So, in the case of having more H2, the ignition timing needs to be retarded to get back to the nominal 50% HR timing (usually 8 deg ATDC) in order to not exceed the NOx emission level and also to control maximum cylinder pressure and to prevent knock. In the case of having more CO2 the ignition timing needs to be advanced to counteract low engine efficiency, high exhaust gas temperatures and the risk of misfire from slow combustion.

In addition, to separate the change of the gas composition from other effects that could change the combustion speed, the main gas valve duration is monitored. To determine whether the main gas valve duration has changed the above said follow-up period can be used. The follow-up period is a period when the main gas valve duration values are monitored. If the monitored values contain a significant change or changes, it may be the reason for the change of the combustion speed. If the monitored values do not contain a significant change or changes, it is ensured that the composition change in the gas is the reason for the change in the combustion speed. As the volumetric heating value of H2 is lower than of NG (and CO2 has a heating value of 0), the gas valve duration can be increased by the control processing unit 10 when either of these gases are blended into NG, in order to keep full engine output.

The ignition timing can adjusted by a number of a crank angle degree being equal with crank angle degrees between crank angles of the average heat release timing and the nominal heat release timing. In other words, the crank angle difference is between the average value and the nominal value is used as a correction value for ignition timing.

The ignition timing can also be adjusted by one crank angle degree or a certain number of the crank angle degrees being less than difference of crank angle degree between the average heat release timing and the nominal heat release timing. In other words the desired nominal value is achieved step by step when the apparatus decreases the difference degree by degree, for example. The step by step is slower, but the benefit of the step by step approach is that the control is more stable reducing fluctuation. Although figures 1 and 2 do not show all connections between the parts inside the control processor unit 10 in order to keep the drawings more clear, it evident that the necessary connections exist, like a connection between the ignition maps and controller 15. The control processor unit 10 and its parts can be made by using different techniques that are known as such, for example using processors, integrated circuits, circuit boards and implemented software.

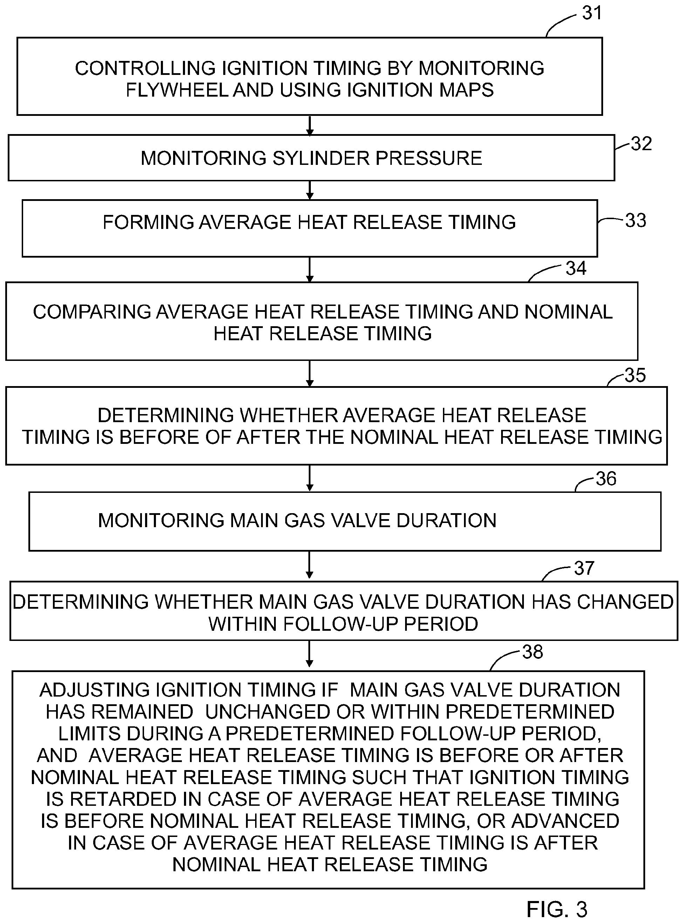

Figure 3 shows a flow chart illustrating the inventive method. The method for controlling combustion in at least one cylinder of an internal combustion engine is arranged to control an ignition timing by monitoring a flywheel and by using ignition maps 31, the method further comprises steps of monitoring pressure in at least one cylinder 32, forming an average heat release timing deduced from the monitoring of the pressure 33, comparing the average heat release timing with a nominal heat release timing 34, and determining whether the average heat release timing is before or after the nominal heat release timing 35.

The method has also the steps of monitoring main gas valve duration 36, and determining whether the main gas valve duration has changed within a follow-up period 37. The step of adjusting the ignition timing 38 is performed if the main gas valve duration has remained unchanged within a follow-up period, and the average heat release timing is before or after the nominal heat release timing. The adjustment is made in such a way that the ignition timing is retarded in case of the average heat release timing is before the nominal heat release timing, or advanced in case of the average heat release timing is after the nominal heat release timing.

Also in the method the average heat release timing and the nominal heat release timing relate to a moment of when a certain amount of fuel has been combusted in the cylinder, like the moment being between 50% - 90 % heat released. The ignition timing can adjusted by a number of a crank angle degree being equal with crank angle degrees between the average heat release timing and the nominal heat release timing. Alternatively the ignition timing is adjusted by one crank angle degree or a certain number of the crank angle degree being with crank angle degrees between the average heat release timing and the nominal heat release timing. The method can further comprise an additional step of increasing main gas valve duration.

So the idea is to monitor the average 50% HR timing or another suitable HR timing with existing cylinder pressure sensors. Since the reference pressure curve of the cylinder is known and a moment when the monitored HR timing exists on the reference curve, the pressure of the cylinder can indicate the moment of the monitored HR timing. This information is combined with the monitoring of main gas valve duration. Then correction of ignition timing can be performed since the change of the gas quality without having a direct gas quality measurement. So, the change of natural gas, biogas or a processed natural gas as fuel in the internal combustion engines can be taken into account in a simple and cost-effective way.

In addition, the NOx emission level does not exceed, and maximum cylinder pressure is better controlled as well as knocking. Low engine efficiency, high exhaust gas temperatures and the risk of misfire can also be avoided.

It is evident from the above that the invention is not limited to the embodiments described in this text but can be implemented in many other different embodiments within the scope of the independent claims.

## Claims

1. A method for controlling combustion in at least one cylinder of an internal combustion engine using gaseous fuel wherein an ignition timing is controlled by monitoring flywheel and by using ignition maps (31), **characterised in that** the method further comprises steps of
monitoring pressure in at least one cylinder (32),
forming an average heat release timing deduced from the monitoring of the pressure (33),
comparing the average heat release timing with a nominal heat release timing (34),
determining whether the average heat release timing is before or after the nominal heat release timing (35),
monitoring main gas valve duration (36),
determining whether the main gas valve duration has changed within a follow-up period (37),
adjusting the ignition timing if the main gas valve duration has remained unchanged or within predetermined limits during a predetermined follow-up period, and the average heat release timing is before or after the nominal heat release timing such that the ignition timing is retarded in case of the average heat release timing is before the nominal heat release timing, or advanced in case of the average heat release timing is after the nominal heat release timing (38).

2. A method according to Claim 1, **characterised in that** the average heat release timing and the nominal heat release timing relate to a moment being between 50% - 90 % heat released.

3. A method according to Claim 2, **characterised in that** the ignition timing is adjusted by a number of a crank angle degree being equal with crank angle degrees between the average heat release timing and the nominal heat release timing.

4. A method according to Claim 2, **characterised in that** the ignition timing is adjusted by one crank angle degree or a certain number of the crank angle degree being with crank angle degrees between the average heat release timing and the nominal heat release timing.

5. A method according to Claim 4, **characterised in that** the method further comprises an additional step of increasing main gas valve duration.

6. An apparatus to control combustion in at least one cylinder of an internal combustion engine having a controller (15) to control ignition timing and monitoring means (16) to monitor a flywheel and ignition maps (13), which controller is arranged to utilize the monitoring means (16) and the ignition maps (13), **characterised in that** the controller (15) is arranged to monitor main gaseous fuel valve duration, and the apparatus further comprises pressure monitoring means (11) to monitor pressure in at least one cylinder (2), and
the apparatus comprises a second controller (17) that is arranged to form an average heat release timing deduced from the monitoring of the pressure by the pressure monitoring means (11), compare the average heat release timing with a nominal heat release timing, determine whether the average heat release timing is before or after the nominal heat release timing, determine whether the main gas valve duration has changed within a follow-up period, and
to adjust the ignition timing in cooperation with the controller (15) if the main gas valve duration has remained unchanged or within predetermined limits during a predetermined follow-up period, and the average heat release timing is before or after the nominal heat release timing such that the ignition timing is retarded in case of the average heat release timing is before the nominal heat release timing, or advanced in case of the average heat release timing is after the nominal heat release timing.

7. An apparatus according to Claim 6, **characterised in that** the average heat release timing and the nominal heat release timing relate to a moment when 50% -90 % heat is released.

8. An apparatus according to Claim 7, **characterised in that** the ignition timing is adjusted by a number of a crank angle degree being equal with crank angle degrees between crank angles of the average heat release timing and the nominal heat release timing.

9. An apparatus according to Claim 7, **characterised in that** the ignition timing is adjusted by one crank angle degree or a certain number of the crank angle degrees being less than difference of crank angle degree between the average heat release timing and the nominal heat release timing.

10. An apparatus according to any of Claim 6 - 9, **characterised in that** the controller (15) is also arranged to increase main gas valve duration.

## Patentansprüche

1. Verfahren zur Steuerung der Verbrennung in mindestens einem Zylinder eines Verbrennungsmotors unter Verwendung von gasförmigem Kraftstoff, bei dem ein Zündzeitpunkt durch Überwachung des Schwungrads und unter Verwendung von Zündkennfeldern (31) gesteuert wird, **dadurch gekennzeichnet, dass** das Verfahren ferner die folgenden Schritte umfasst:
Überwachen des Drucks in mindestens einem Zylinder (32),
Bilden eines durchschnittlichen Wärmefreigabezeitpunkts, der aus der Überwachung des Drucks (33) abgeleitet wird,
Vergleichen des durchschnittlichen Wärmefreigabezeitpunkts mit einem nominalen Wärmefreigabezeitpunkt (34),
Bestimmen, ob der durchschnittliche Wärmefreigabezeitpunkt vor oder nach dem nominalen Wärmefreigabezeitpunkt (35) liegt,
Überwachen der Hauptgasventildauer (36), Bestimmen, ob sich die Hauptgasventildauer innerhalb einer Nachlaufperiode (37) geändert hat,
Anpassen des Zündzeitpunkts, wenn die Hauptgasventildauer während einer vorbestimmten Nachlaufperiode unverändert oder innerhalb vorbestimmter Grenzen geblieben ist und der durchschnittliche Wärmefreigabezeitpunkt vor oder nach dem nominalen Wärmefreigabezeitpunkt liegt, so dass der Zündzeitpunkt verzögert wird, wenn der durchschnittliche Wärmefreigabezeitpunkt vor dem nominalen Wärmefreigabezeitpunkt liegt, oder vorverlegt wird, wenn der durchschnittliche Wärmefreigabezeitpunkt nach dem nominalen Wärmefreigabezeitpunkt liegt (38).

2. Verfahren nach Anspruch 1, **dadurch gekennzeichnet, dass** sich der durchschnittliche Wärmefreigabezeitpunkt und der nominale Wärmefreigabezeitpunkt auf einen Zeitpunkt beziehen, der zwischen 50 % - 90 % abgegebener Wärme liegt.

3. Verfahren nach Anspruch 2, **dadurch gekennzeichnet, dass** der Zündzeitpunkt durch eine Anzahl eines Kurbelwinkelgrades eingestellt wird, die gleich den Kurbelwinkelgraden zwischen dem durchschnittlichen Wärmefreigabezeitpunkt und dem nominalen Wärmefreigabezeitpunkt ist.

4. Verfahren nach Anspruch 2, **dadurch gekennzeichnet, dass** der Zündzeitpunkt um einen Kurbelwinkelgrad oder eine bestimmte Anzahl des Kurbelwinkelgrades mit Kurbelwinkelgraden zwischen dem durchschnittlichen Wärmefreigabezeitpunkt und dem nominalen Wärmefreigabezeitpunkt eingestellt wird.

5. Verfahren nach Anspruch 4, **dadurch gekennzeichnet, dass** das Verfahren ferner einen zusätzlichen Schritt zur Erhöhung der Hauptgasventildauer umfasst.

6. Vorrichtung zur Steuerung der Verbrennung in mindestens einem Zylinder eines Verbrennungsmotors mit einer Steuerung (15) zur Steuerung des Zündzeitpunkts und Überwachungsmitteln (16) zur Überwachung eines Schwungrads und der Zündkennfelder (13), wobei die Steuerung so angeordnet ist, dass sie die Überwachungsmittel (16) und die Zündkennfelder (13) verwendet, **dadurch gekennzeichnet, dass** die Steuerung (15) so angeordnet ist, dass sie die Hauptventildauer für gasförmigen Kraftstoff überwacht, und die Vorrichtung ferner Drucküberwachungsmittel (11) umfasst, um den Druck in mindestens einem Zylinder (2) zu überwachen, und
die Vorrichtung eine zweite Steuerung (17) umfasst, die so angeordnet ist, dass sie einen durchschnittlichen Wärmefreigabezeitpunkt bildet, der aus der Überwachung des Drucks durch die Drucküberwachungsmittel (11) abgeleitet wird, den durchschnittlichen Wärmefreigabezeitpunkt mit einem nominalen Wärmefreigabezeitpunkt vergleicht, bestimmt, ob der durchschnittliche Wärmefreigabezeitpunkt vor oder nach dem nominalen Wärmefreigabezeitpunkt liegt, bestimmt, ob sich die Hauptgasventildauer innerhalb einer Nachlaufperiode geändert hat, und
den Zündzeitpunkt in Zusammenarbeit mit der Steuerung (15) anpasst, wenn die Hauptgasventildauer während einer vorbestimmten Nachlaufperiode unverändert oder innerhalb vorbestimmter Grenzen geblieben ist, und der durchschnittliche Wärmefreigabezeitpunkt vor oder nach dem nominalen Wärmefreigabezeitpunkt liegt, so dass der Zündzeitpunkt verzögert wird, wenn der durchschnittliche Wärmefreigabezeitpunkt vor dem nominalen Wärmefreigabezeitpunkt liegt, oder vorverlegt wird, wenn der durchschnittliche Wärmefreigabezeitpunkt nach dem nominalen Wärmefreigabezeitpunkt liegt.

7. Vorrichtung nach Anspruch 6, **dadurch gekennzeichnet, dass** sich der durchschnittliche Wärmefreigabezeitpunkt und der nominale Wärmefreigabezeitpunkt auf einen Zeitpunkt beziehen, zu dem 50% - 90% Wärme abgegeben wird.

8. Vorrichtung nach Anspruch 7, **dadurch gekennzeichnet, dass** der Zündzeitpunkt durch eine Anzahl eines Kurbelwinkelgrades eingestellt wird, die gleich den Kurbelwinkelgraden zwischen den Kurbelwinkeln des durchschnittlichen Wärmefreigabezeitpunkts und des nominalen Wärmefreigabezeitpunkts ist.

9. Vorrichtung nach Anspruch 7, **dadurch gekennzeichnet, dass** der Zündzeitpunkt um einen Kurbelwinkelgrad oder eine bestimmte Anzahl von Kurbelwinkelgraden eingestellt wird, die kleiner ist als die Differenz des Kurbelwinkelgrades zwischen dem durchschnittlichen Wärmefreigabezeitpunkt und dem nominalen Wärmefreigabezeitpunkt.

10. Vorrichtung nach einem der Ansprüche 6 - 9, **dadurch gekennzeichnet, dass** die Steuerung (15) auch so angeordnet ist, dass sie die Hauptgasventildauer verlängert.

## Revendications

1. Procédé de commande de la combustion dans au moins un cylindre d'un moteur à combustion interne en utilisant du carburant gazeux, dans lequel une temporisation d'allumage est commandée en contrôlant un volant et en utilisant des cartes d'allumage (31), **caractérisé en ce que** ce procédé comprend les étapes suivantes :
contrôle de la pression dans au moins un cylindre (32),
établissement d'une temporisation moyenne de dégagement de chaleur déduite du contrôle de la pression (33),
comparaison de la temporisation moyenne de dégagement de chaleur avec une temporisation nominale de dégagement de chaleur (34),
détermination si la temporisation moyenne de dégagement de chaleur se trouve avant ou après la temporisation nominale de dégagement de chaleur (35),
contrôle de la durée de la vanne à gaz principale (36),
détermination si la durée de la vanne à gaz principale a changé pendant une période de suivi (37),
ajustement de la temporisation d'allumage si la durée de vanne à gaz principale est restée inchangée ou dans des limites prédéterminées pendant une période de suivi prédéterminée, et si la temporisation moyenne de dégagement de chaleur se trouve en amont ou après la temporisation nominale de dégagement de chaleur, de sorte que la temporisation d'allumage est retardée dans le cas où la temporisation moyenne de dégagement de chaleur se situe avant la temporisation nominale de dégagement de chaleur, ou avancée dans le cas où la temporisation moyenne de dégagement de chaleur se situe après la temporisation nominale de dégagement de chaleur (38).

2. Procédé selon la revendication 1, **caractérisé en ce que** la temporisation moyenne de dégagement de chaleur et la temporisation nominale de dégagement de chaleur sont relatives à un moment qui se situe entre 50 % et 90 % de dégagement de chaleur.

3. Procédé selon la revendication 2, **caractérisé en ce que** la temporisation d'allumage est ajustée par un nombre d'un degré d'angle de vilebrequin qui est égal des degrés d'angle de vilebrequin entre la temporisation moyenne de dégagement de chaleur et la temporisation nominale de dégagement de chaleur.

4. Procédé selon la revendication 2, **caractérisé en ce que** la temporisation d'allumage est ajustée par un degré d'angle de vilebrequin ou un certain nombre du degré d'angle de vilebrequin avec des degrés d'angle de vilebrequin entre la temporisation moyenne de dégagement de chaleur et la temporisation nominale de dégagement de chaleur.

5. Procédé selon la revendication 4, **caractérisé en ce que** ce procédé comprend en outre une étape supplémentaire d'augmentation de la durée de vanne à gaz principale.

6. Appareil de commande de la combustion dans au moins un cylindre d'un moteur à combustion interne comportant une commande (15) pour commander la temporisation d'allumage et un moyen de contrôle (16) pour contrôler un volant et des cartes d'allumage (13), laquelle commande est conçue pour utiliser le moyen de commande (16) et les cartes d'allumage (13), **caractérisé en ce que** la commande (15) est conçue pour contrôler la durée de vanne à carburant gazeux principale, et l'appareil comprend en outre un moyen de contrôle de pression (11) pour contrôler la pression dans au moins un cylindre (2), et
l'appareil comprend une seconde commande (17) qui est conçue pour établir une temporisation moyenne de dégagement de chaleur déduite du contrôle de la pression par le moyen de contrôle de pression (11), comparer la temporisation moyenne de dégagement de chaleur avec une temporisation nominale de dégagement de chaleur, déterminer si la temporisation moyenne de dégagement de chaleur se situe avant ou après la temporisation nominale de dégagement de chaleur, déterminer si la durée de la vanne à un gaz principale a changé pendant une période de suivi, et
pour ajuster la temporisation d'allumage en coopération avec la commande (15) si la durée de la vanne à gaz principale est restée inchangée dans les limites prédéterminées pendant une période de suivi prédéterminé, et si la temporisation moyenne de dégagement de chaleur se situe avant ou après la temporisation nominale de dégagement de chaleur, de sorte que la temporisation d'allumage est retardée dans le cas où la temporisation moyenne de dégagement de chaleur se situe avant la temporisation nominale de dégagement de chaleur, ou avancée dans le cas où la temporisation moyenne de dégagement de chaleur se situe après la temporisation nominale de dégagement de chaleur.

7. Appareil selon la revendication 6, **caractérisé en ce que** la temporisation moyenne de dégagement de chaleur et la temporisation nominale de dégagement de chaleur sont relatives à un moment où 50 % à 90 % de chaleur est dégagée.

8. Appareil selon la revendication 7, **caractérisé en ce que** la temporisation d'allumage est ajustée par un nombre de degré d'angle de vilebrequin qui est égal à des degrés d'angle de vilebrequin entre des angles de vilebrequin de la temporisation moyenne de dégagement de chaleur et de la temporisation nominale de dégagement de chaleur.

9. Appareil selon la revendication 7, **caractérisé en ce que** la temporisation d'allumage est ajustée par un degré d'angle de vilebrequin ou un certain nombre des degrés d'angle de vilebrequin qui est inférieur à la différence de degré d'angle de vilebrequin entre la temporisation moyenne de dégagement de chaleur et la temporisation nominale de dégagement de chaleur.

10. Appareil selon l'une quelconque des revendications 6 à 9, **caractérisé en ce que** la commande (15) est aussi conçue pour augmenter la durée de vanne à gaz principale.
